**Europäisches Patentamt**

**European Patent Office**

**Office européen des brevets**

(11) Veröffentlichungsnummer: **0 164 712**
**B1**

# EUROPÄISCHE PATENTSCHRIFT

(45) Veröffentlichungstag der Patentschrift:
**27.09.89**

(21) Anmeldenummer: **85107110.0**

(22) Anmeldetag: **10.06.85**

(51) Int. Cl.⁴: **C 08 J 3/00**, **C 08 K 3/36**,
**C 08 L 25/10**

(54) Verfahren zur Herstellung von Presskörpern aus kleinteiligen thermoplastischen Polymerisaten.

(30) Priorität: **14.06.84 DE 3421978**

(43) Veröffentlichungstag der Anmeldung:
**18.12.85 Patentblatt 85/51**

(45) Bekanntmachung des Hinweises auf die Patenterteilung:
**27.09.89 Patentblatt 89/39**

(84) Benannte Vertragsstaaten:
**BE DE FR GB IT NL SE**

(56) Entgegenhaltungen:
**US-A- 3 012 900**
**US-A- 4 183 887**

(73) Patentinhaber: **BASF Aktiengesellschaft,
Carl-Bosch-Strasse 38, D-6700 Ludwigshafen (DE)**

(72) Erfinder: **Vogel, Hans-Henning, Dr.,
Hans-Purrmann-Strasse 7 c, D-6710 Frankenthal (DE)**

# Beschreibung

Die vorliegende Erfindung betrifft ein Verfahren zur Herstellung von Presskörpern aus kleinteiligen thermoplastischen Polymerisaten.

Wie allgemein bekannt ist, fallen thermoplastische Polymerisate in der Technik häufig in Form kleiner Teilchen geringen Schüttgewichtes an, beispielsweise bei der Ausfällung von Lösungspolymerisaten aus ihren Lösungen und der anschliessenden Trocknung der ausgefällten Teilchen.

Da die Polymerisate stets weiterverarbeitet werden, z.B. indem man sie zum Zwecke der Formgebung aufschmilzt oder indem man sie für ihren Gebrauchszweck oder für weitere Umsetzungen wieder in Lösung bringt, sind kleine Teilchen an sich von Vorteil. Andererseits haben die Partikel, besonders wenn sie krümelig oder flokkig sind, häufig ein sehr geringes Schüttgewicht, weshalb Transport und Lagerung hohe Kosten verursachen. In diesen Fällen ist es daher insgesamt wirtschaftlicher, die Teilchen zu festen Blöcken zu verpressen und in dieser Form zu transportieren und zu lagern. Zwar müssen die Blöcke dann vor Gebrauch wieder zerkleinert werden, jedoch fällt dieser Nachteil kaum ins Gewicht, weil sich Blöcke die durch Verpressung feinteiliger Krümel erhalten wurden, wesentlich leichter wieder zerkleinern lassen, als aus Polymerisatschmelzen gegossene Blöcke.

Die Verpressung der Partikel führt nun aber oft nicht zu den gewünschten stabilen Blöcken, sondern selbst bei Anwendung hohen Pressdrucks nur zu solchen Blöcken, die schon bei geringer mechanischer Beanspruchung wieder in mehr oder weniger grosse Teile zerfallen.

Der Erfindung lag daher die Aufgabe zugrunde, diesen Nachteil zu vermeiden.

Demgemäss wurde ein Verfahren zur Herstellung von Presskörpern aus kleinteiligen thermoplastischen Polymerisaten gefunden, welches dadurch gekennzeichnet ist, dass man die Polymerisatteilchen vor der Verpressung mit einer wirksamen Menge amorphen Siliciumdioxids vermischt, wobei die Grösse dieser wirksamen Menge weniger als 0,4 Gew.-%, bezogen auf das Polymerisat, beträgt.

Dass man auf diese Weise stabile Presskörper erhält, ist höchst bemerkenswert, weil amorphes Siliciumdioxid bekanntermassen als Trennmittel für solche Polymerisatpartikel empfohlen und verwendet wird, die noch eine gewisse Klebrigkeit aufweisen und deren Rieselfähigkeit erhalten bleiben soll (s. z.B. US-A 4 183 887). Allerdings setzt die Wirkung von amorphem Siliciumdioxid als Trennmittel im allgemeinen erst bei Konzentrationen 0,4 Gew.-% $SiO_2$ ein, wobei die Wirkung als Presshilfsmittel häufig wieder deutlich abnimmt.

Die für das erfindungsgemässe Verfahren wirksamen Mengen des amorphen Siliciumdioxids als Presshilfsmittel liegen hingegen in der Regel zwischen 0,01 und 0,3 Gew.-%, bezogen auf die Menge des Polymerisats.

Das erfindungsgemäss zu verwendende amorphe Siliciumdioxid kann verschiedener Provenienz sein. So eignen sich beispielsweise natürliche Kieselsäuren (Kieselerden), Kieselgur und Kieselgele diverser Art, die u.a. als Füllstoffe, Trockenmittel, Adsorptionsmittel und Trennmittel in verschiedenen Qualitäten im Handel erhältlich sind. Besonders geeignet sind die synthetisch hergestellten amorphen Kieselsäuren (amorphes Siliciumdioxid), wie sie z.B. durch Flammen-Hydrolyse von Siliciumhalogeniden (pyrogene Kieselsäure) oder durch Fällung von Alkalisilikaten mit Säuren auf nassem Weg erhalten werden.

Weiterhin kommen amorphe Kieselsäuren natürlicher Herkunft in Betracht. Diese natürlichen Kieselsäuren können Begleitstoffe wie Alkali- und Erdalkalimetallsilikate enthalten, da diese beim vorliegenden Verwendungszweck nicht stören. Auf spezielle Eigenschaften wie die innere Oberfläche oder auf eine besondere Reinheit kommt es hierbei nach den bisherigen Beobachtungen nicht an, desgleichen nicht auf die Teilchengrösse, da alle amorphen $SiO_2$-Typen genügend feinteilig sind oder bei Mischvorgängen in genügend feine Teile zerfallen.

Sofern es bei den Endprodukten, die aus den Polymerisaten hergestellt werden sollen, nicht, wie beispielsweise bei Klarlacken, auf hohe Transparenz ankommt, stören die geringen Mengen $SiO_2$ nicht, zumal die Polymerisate meistens ohnehin mit Füllstoffen oder Pigmenten versetzt werden.

Die chemische Natur der Polymerisate hat keinen erkennbaren Einfluss auf das Gelingen des erfindungsgemässen Verfahrens, wohl aber scheint eine gewisse Plastizität hierfür Voraussetzung zu sein. Das Verfahren kann daher prinzipiell auf thermoplastische Polymerisate angewandt werden, also auf Homo- und Copolymerisate von Olefinen, des Butadiens, Isoprens, des Styrols, von Vinylestern sowie von Estern, Amiden und Nitrilen der Acrylsäure und der Methacrylsäure.

Besondere Bedeutung hat das Verfahren naturgemäss im Falle der Lösungsmittelpolymerisation, weil man hier die reinen Polymerisate in der Regel mit einem anderen Lösungsmittel unter intensivem Rühren in Form kleiner Teilchen ausfällt, die anschliessend getrocknet werden.

Solche Polymeren sind beispielsweise gegebenenfalls hydrierte Copolymerisate aus Butadien und/oder Isopren und/oder Isobuten einerseits und Styrol andererseits, die zur Verbesserung der Viskositätseigenschaften von Schmierfetten und Schmierölen aller Art, insbesondere von Mehrbereichsölen für Verbrennungsmotoren, Verwendung finden. Die geringen Mengen des amorphen $SiO_2$ haben hierbei keinen Einfluss auf die Qualität der Schmieröle, weil es sich bei dem Presshilfsmittel um ein sehr feinteiliges und weiches Material handelt, welches keinen mechanischen Abrieb an den zu schmierenden Motoren- und Getriebeteilen verursachen kann.

Ein weiteres Anwendungsgebiet für das erfindungsgemässe Verfahren ist die Herstellung von Blöcken aus Teilchen von thermoplastischen Polymeren, die als Grundmasse für Lacke und Anstrichfarben dienen.

Die Vermischung der Polymerisatteilchen mit dem amorpehn $SiO_2$ ist problemlos und kann nach den üblichen Techniken vorgenommen werden. Man erhält hierbei Polymerisat-Partikel, die mit einer dünnen Schicht des Hilfsmittels bepudert sind.

Ebenfalls unproblematisch ist die anschliessende Verpressung zu den festen Presskörpern – meist Blöcken – so dass sich auch hierzu nähere Angaben erübrigen. Es sei lediglich hervorgehoben, dass der erforderliche Pressdruck bei Verpressung der erfindungsgemäss vorbehandelten Teilchen bei gleicher Presstemperatur wesentlich geringer ist als derjenige Druck, der zur Erzielung des gleichen Ergebnisses im Falle von nicht vorbehandeltem Material erforderlich wäre.

Beispiel

Ein hydriertes statistisches Copolymerisat aus 53 Gew.-% Styrol und 47 Gew.-% Butadien des mittleren Molekulargewichtes 110 000, wie es als Viskositätsindex-Verbesserer für Schmieröle Verwendung findet und welches durch Lösungsmittelpolymerisation und anschliessende Hydrierung in Cyclohexan hergestellt worden war und dessen Schmelze nach destillativer Entfernung des Cyclohexans extrudiert und dabei zu Teilchen von 1–2 mm Durchmesser zerkleinert worden war, wurde mit amorphen $SiO_2$ ®Aerosil 200 von Degussa) in einer Versuchspresse bei Raumtemperatur bzw. rd. 40°C unter verschiedenen Bedingungen zu scheibenförmigen Presskörpern (12 cm Durchmesser, 2 cm Dicke) verpresst, wobei die Pressdauer jeweils 5 min betrug. Einzelheiten dieser Versuche und entsprechender Vergleichsversuche ohne das $SiO_2$ sowie deren Ergebnisse sind der folgenden Tabelle zu entnehmen, aus der hervorgeht, dass die wirksame Menge des amorphen $SiO_2$ je nach Pressdruck in diesem Falle im Bereich von 0,05 Gew.-% lag, bezogen auf die Menge des Polymerisates.

Tabelle

Verpressung der Polymerisat-Teilchen gemäss Beispiel

| Versuch Nr. | $SiO_2$ [Gew.-%] | Pressdruck [bar] | Temperatur [°C] | Ergebnis |
|---|---|---|---|---|
| zum Vergleich | | | | |
| 1a | – | 20 | 25 | kein Presskörper, Masse blieb weitgehend krümelig |
| b | – | 50 | 25 | Presskörper gering verbacken, zerfiel leicht |
| c | – | 100 | 25 | Presskörper von Hand zerkrümelbar, nicht biegefest |
| d | – | 200 | 25 | Presskörper von Hand zerkrümelbar, nicht biegefest |
| erfindungsgemäss | | | | |
| 2a | 0,05 | 50 | 25 | Presskörper verbacken, von Hand schwer zerkrümelbar |
| b | 0,05 | 100 | 25 | stabiler Presskörper, jedoch nicht biegefest |
| c | 0,05 | 200 | 25 | stabiler Presskörper, fast gänzlich biegefest |
| d | 0,05 | 50 | 40 | weitgehend verschmolzener Presskörper, gänzlich biegefest |

## Patentansprüche

1. Verfahren zur Herstellung von Presskörpern aus kleinteiligen thermoplastischen Polymerisaten, dadurch gekennzeichnet, dass man die Polymerisatteilchen vor der Verpressung mit einer wirksamen Menge amorphen Siliciumdioxids vermischt, wobei die Grösse dieser wirksamen Menge weniger als 0,4 Gew.-% bezogen auf das Polymerisat beträgt.

2. Presskörper, erhalten nach dem Verfahren von Anspruch 1.

3. Verfahren nach Anspruch 1, dadurch gekennzeichnet, dass man es auf hydrierte thermoplastische Copolymerisation anwendet, die im wesentlichen aus Styrol einerseits und Butadien und/oder Isopren andererseits aufgebaut sind.

4. Presskörper, erhalten nach dem Verfahren von Anspruch 3.

5. Verwendung der Presskörper gemäss Anspruch 4 zur Herstellung von Mehrbereichsmotorenölen und ähnlichen Schmiermitteln.

## Claims

1. A process for the production of compression moldings from finely divided thermoplastic polymers, wherein the polymer particles are mixed with an effective amount of amorphous silica before being subjected to compression molding, effective amount being less than 0.4% by weight, based on the polymer.

2. A compression molding obtained by the process of claim 1.

3. A process as claimed in claim 1, which is applied to a hydrogenated thermoplastic copolymer which essentially consists of styrene on the one hand and butadiene and/or isoprene on the other hand.

4. A compression molding obtained by the process of claim 3.

5. Use of a compression molding as claimed in claim 4 for the production of multigrade oils for engines and similar lubricants.

## Revendications

1. Procédé de fabrication de comprimés à partir de polymères thermoplastiques en fines particules, caractérisé en ce qu'avant le pressage, on mélange les particules de polmère avec une quantité efficace de bioxyde de silicium amorphe, la grandeur de cette quantité efficace s'élevant à moins de 0,4% en poids par rapport au polymère.

2. Comprimés, obtenus suivant le procédé de la revendication 1.

3. Procédé selon la revendication 1, caractérisé en ce qu'on l'applique à des copolymères thermoplastiques hydrogénés qui sont essentiellement constitués d'une part de styrène et, d'autre part, de butadiène et/ou d'isoprène.

4. Comprimés, obtenus suivant le procédé de la revendication 3.

5. Utilisation des comprimés selon la revendication 4 pour la fabrication d'huiles à moteurs multigrades et de lubrifiants analogues.